# EUROPÄISCHE PATENTSCHRIFT

(11) **EP 2 522 543 B1**
(45) Veröffentlichungstag und Bekanntmachung des Hinweises auf die Patenterteilung: **13.07.2016**
(21) Anmeldenummer: 12167448.5
(22) Anmeldetag: 10.05.2012
(51) Int. Cl.: B60N 2/20, B60N 2/22, B60N 2/44, B60N 2/48, B60N 2/58, B60N 2/60, B60N 2/68

(54) **Fahrzeugsitz, insbesondere Kraftfahrzeugsitz**
Vehicle seat, in particular motor vehicle seat
Siège de véhicule, en particulier siège de véhicule automobile

(30) Priorität: 13.05.2011 DE 202011100683 U
(43) Veröffentlichungstag der Anmeldung: 14.11.2012
(73) Patentinhaber: RECARO AUTOMOTIVE Ltd. & Co. KG, 73230 Kirchheim unter Teck (DE)
(72) Erfinder: Lachenmann, Jürgen, 72622 Nürtingen (DE); Stohrer, Uwe, 73061 Ebersbach (DE); Ritzel, Michael, 70180 Stuttgart (DE); Nickel, Patrick, 71549 Auenwald (DE)
(74) Vertreter: Siekmann, Gunnar

(56) Entgegenhaltungen:
- US-A- 4 592 588
- US-A- 6 027 171

## Beschreibung

Die Erfindung betrifft einen Fahrzeugsitz, insbesondere einen Kraftfahrzeugsitz, mit den Merkmalen des Oberbegriffs des Anspruches 1.

Ein derartiger Fahrzeugsitz ist aus der US 4 592 588 A bekannt.

Bei einem durch Benutzung bekannten Fahrzeugsitz dieser Art ist am Rand des Be-zugs eine Einhängeleiste befestigt, mittels derer der Bezug an einem Einhängekanal entlang des äußeren Randes der Lehnenschale eingehängt ist, also entlang des oberen und seitliche Randes eines Kopfstützenbereichs und zweier anschließender Schulterwangen und entlang des vorderen Randes zweier Seitenwangen, gegebenenfalls auch entlang des unteren Endes der Lehnenschale. Die vom Insassen abgewandte Rückseite der Lehnenschale, also insbesondere die Rückseite von deren Hauptbereich und gegebenenfalls angeformten Kopfstützenbereich, ist als Sichtfläche ausgebildet, während die vom Insassen abgewandten Außenseiten der Seitenwangen jeweils durch eine Blende abgedeckt sind, welche einen Lehnenholm zur Verbindung der Lehnenschale mit einem Neigungseinstellbeschlag und gegebenenfalls einen Seitenairbag bedeckt.

Der Erfindung liegt die Aufgabe zu Grunde, einen Fahrzeugsitz der eingangs ge-nannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

An der Seitenwange verläuft der erste Einhängekanal entlang des vorderen Randes der Seitenwange, während der zweite Einhängekanal entlang des hinteren Randes der Seitenwange verläuft, also weitgehend vom ersten Einhängekanal beabstandet. Der mittels des zweiten Einhängekanals an der Lehnenschale befestigte Bezug be-deckt dann die Außenseite der Seitenwange samt gegebenenfalls daran befestigten Bauteile, beispielsweise Seitenholme und/oder Seitenairbags. Dadurch entfällt eine gesonderte Blende, d.h. die Anzahl der Bauteile wird reduziert und der Zusammenbau vereinfacht. Zudem wird ein einheitliches Design der dem Insassen zugewandten Innenseite der Seitenwange und der vom Insassen abgewandten Außenseite ermöglicht. Es kann aber auch ein Baukasten geschaffen werden, bei dem in einer Variante der Bezug mittels des ersten und des zweiten Einhängekanals an der Lehnenschale befestigt ist und in der alternativen Variante ausschließlich mittels des ersten Einhängekanals, wobei dann eine zusätzliche Blende die Außenseite der Seitenwange abdeckt.

Der Bezug ist vorzugsweise mit einer - beispielsweise angenähten - Einhängeleiste versehen, welche abschnittsweise in einen der Einhängekanäle eingeführt wird. Die Verbindung der Einhängeleiste und des Einhängekanals werden vorzugsweise durch Widerhaken verbessert, indem die Einhängeleiste einen Haken (im Profil) aufweist, welcher einen Gegenhaken am Rand des Einhängekanals, also am Rand der Lehnenschale oder an einer Rippe der Seitenwange, hintergreift. Das System der Widerhaken kann unabhängig davon verwendet werden, ob die Befestigung des Bezugs an der Lehnenschale mittels eines zweiten Einhängekanals am Übergang zwischen Seitenwange und Hauptbereich der Lehnenschale erfolgt.

Die Erfindung ist bei allen Fahrzeugsitzen anwendbar, insbesondere bei starker Konturierung und/oder bei einem wertbestimmenden Design.

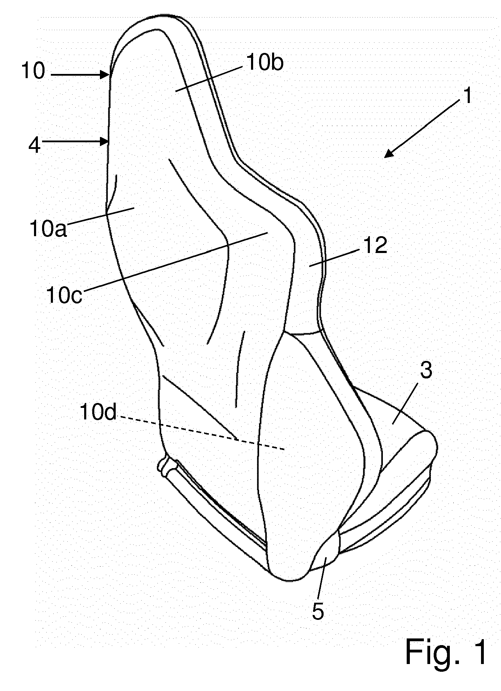

Im folgenden ist die Erfindung anhand eines in der Zeichnung dargestellten Ausführungsbeispiels näher erläutert. Es zeigen
Fig. 1: eine perspektivische Ansicht des Ausführungsbeispiels mit Bezug,

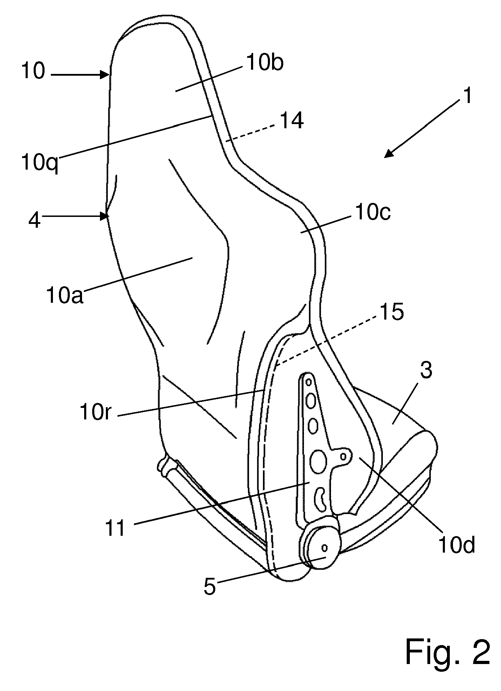

Fig. 2: eine Fig. 1 entsprechende Ansicht ohne Bezug, und
Fig. 3: einen Schnitt durch den Randbereich der Lehne.

Ein Fahrzeugsitz 1 für ein Kraftfahrzeug weist ein Sitzteil 3 und eine Lehne 4 auf. Die Anordnung des Fahrzeugsitzes 1 innerhalb des Kraftfahrzeuges und dessen gewöhnliche Fahrtrichtung definieren die nachfolgend verwendeten Richtungsangaben. Die Lehne 4 ist vorliegend seitlich mittels Beschlägen 5 neigungseinstellbar und/oder freischwenkbar und/oder anderweitig schwenkbar am Sitzteil 3 angebracht. Dabei weisen die Beschläge 5 jeweils zwei relativ zueinander verdrehbare Beschlagteile auf, welche miteinander in Getriebeverbindung stehen oder miteinander verriegelbar sind.

Die Lehne 4 weist als tragende Struktur eine Lehnenschale 10 auf, beispielsweise aus Carbon oder glasfaserverstärktem Kunststoff. o.ä.). Die Lehnenschale 10 ist (stark) konturiert und weist in ihrer Mitte einen wenig gekrümmten Hauptbereich 10a und daran anschließend einen vom Hauptbereich 10a nach oben abstehenden Kopfstützenbereich 10b, unterhalb davon beidseitig je eine Schulterwange 10c, die vom Hauptbereich 10a leicht nach vorne absteht, und unter jeder Schulterwange 10c beidseitig eine Seitenwange 10d, die vom Hauptbereich 10a stark nach vorne absteht, auf. An den beiden Seitenwange 10d ist jeweils ein Lehnenholm 11 befestigt, beispielsweise angeschraubt, welcher mit einem der beiden Beschlagteile des auf dieser Fahrzeugsitzseite vorgesehenen Beschlags 5 fest verbunden ist, während das andere Beschlagteil des Beschlags 5 mit der Struktur des Sitzteils 3 verbunden ist.

Die Lehnenschale 10 ist auf der vom Insassen abgewandte abgewandten Rückseite der Lehne 4 sichtbar, d.h. diese Rückseite ist als Sichtfläche ausgebildet, welche ungepolstert und ohne Bezug, aber in der Regel lackiert ist. Die Lehne 4 weist auf der dem Insassen zugewandten Vorderseite ein nicht näher dargestelltes Polster und einen Bezug 12 auf. Das an der Lehnenschale 10 oder am Bezug 12 befestigte Polster besteht beispielsweise aus Schaumstoff oder einem Abstandsgewirke. Der Bezug 12 weist auf der dem Insassen zugewandten Seite beispielsweise Leder, Kunstleder oder Stoff als Obermaterial und auf der vom Insassen abgewandten Seite eine am Obermaterial angeklebte Kaschierung aus Schaumstoff auf.

Zur Befestigung des Bezugs 12 an der Lehnenschale 10 weist die Lehnenschale 10 einen ersten Einhängekanal 14 auf, welcher am (umlaufenden) Rand 10q der Leh-nenschale 10 ausgebildet ist, indem der Rand 10q der Lehnenschale 10 gegenüber dem an den Rand 10q anschließenden Bereich der Lehnenschale 10 um mehr als 120°, vorliegend etwa 170°, umgebogen ausgebildet ist, so dass ein J-förmiges Pro-fil entsteht.. Der erste Einhängekanal 14 ist daher im Kopfstützenbereich 10b, wo er sich oben nach unten und seitlich nach hinten öffnet, den Schulterwangen 10c, wo er sich nach hinten öffnet, und den Seitenwangen 10d, wo er sich nach hinten und abschnittsweise nach unten und schließlich nach oben öffnet, ausgebildet, gegebenenfalls auch am unteren Ende der Lehnenschale 10.

Erfindungsgemäß ist ein zweiter Einhängekanal 15 ausgebildet, indem die beiden Seitenwangen 10d am Übergang zum Hauptbereich 10a mit einer nach hinten wei-senden Rippe 10r versehen sind. Der zweite Einhängekanal 15 entsteht dann in einer Vertiefung zwischen der Rippe 10r und dem Hauptbereich 10a der Lehnenschale 10 mit einem U-förmigen Profil und öffnet sich nach hinten. Der zweite Einhängekanal 15 verläuft nach oben bis zum Übergang von der Seitenwange 10d zur Schulterwange 10c und endet am oberen Ende der Seitenwange 10d in geringem Abstand (beispielsweise 1 bis 5 cm) zum ersten Einhängekanal 14.

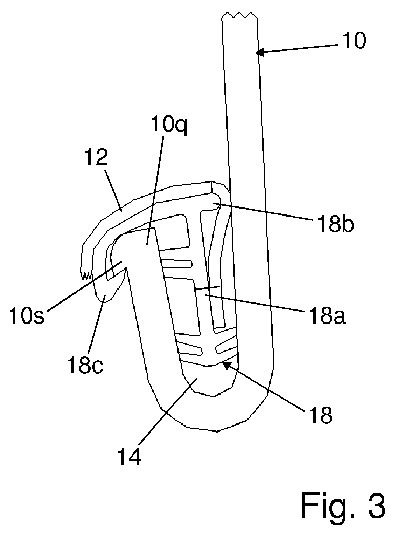

Der Bezug 12 weist an seinem Rand eine flexible Einhängeleiste 18 auf, welche mittels einer Naht 18a mit dem kaschierten Obermaterial vernäht ist, gegebenenfalls indem zusätzlich zur Kaschierung noch ein textiles Band oder dergleichen zur Verstärkung auf das Obermaterial geklebt ist. Die Einhängeleiste 18 kann aus mehreren, entlang des Randes des Bezugs 12 aneinander anschließenden Abschnitten bestehen. Der Bezug 12 ist im Kopfstützenbereich 10b und an den Schulterwangen 10c mit der Einhängeleiste 18 in den ersten Einhängekanal 14 eingehängt, wie in Fig. 3 dargestellt. Die Einhängeleiste 18 weist im Profil einen Wulst 18b auf, mittels dessen sie den Bezug 12 gegen die Lehnenschale 10 drückt. Ferner weist die Einhängeleiste 18 im Profil - auf der vom Wulst 18b abgewandten Seite - einen Haken18c auf, welcher einen Gegenhaken 10s am Rand 10q der Lehnenschale 10 hintergreift. Die Einhängeleiste 18 ist einstückig aus zwei verschieden harten Kunststoffen gespritzt. Der weichere Teil ist derjenige, der tiefer in den ersten Einhängekanal 14 eingeführt wird. Der härtere Teil ist derjenige, welcher den Wulst 18b und den Haken 18c aufweist.

Erfindungsgemäß ist der Bezug 12 im Anschluss an die Schulterwangen 10c auf beiden Fahrzeugsitzseiten vollständig über die Seitenwangen 10d gezogen und mit der Einhängeleiste 18 jeweils in den zweiten Einhängekanal 15 eingehängt, in einer Fig. 3 entsprechenden Weise, d.h. die Einhängeleiste 18 ist in den zweiten Einhängekanal 15 eingeführt, der Wulst 18b drückt den Bezug 12 gegen die Lehnenschale 10 und der Haken 18c hintergreift einen Gegenhaken 10s an der Rippe 10r der zugeordneten Seitenwange 10d. Die Befestigung des Bezugs 12 wechselt also vom ersten Einhängekanal 14 zum zweiten Einhängekanal 15. Der Bezug 12 bedeckt dadurch die vom Insassen abgewandte Außenseite der jeweiligen Seitenwange 10d einschließlich des daran befestigten Lehnenholms 11. Sofern ein Seitenairbag vorgesehen ist, wird dieser an am Lehnenholm 11 (oder an der zugeordneten Seitenwange 10d) angebracht und auch vom Bezug 12 bedeckt. Der Bezug 12 weist dann eine Airbagnaht auf, welche an dem nach vorne weisenden Rand der Seitenwange 10d angeordnet ist und welche im Crashfall reißt, damit der Seitenairbag sich entfalten kann.

## Patentansprüche

1. Fahrzeugsitz, insbesondere Kraftfahrzeugsitz, mit einem Sitzteil (3) und einer Lehne (4), die eine Lehnenschale (10) als tragende Struktur und einen Bezug aufweist, wobei die Lehnenschale (10) einen Hauptbereich (10a), beidseitig jeweils eine vom Hauptbereich (10a) abstehende Seitenwange (10d) aufweist und entlang des Randes (10q) der Lehnenschale (10) wenigstens abschnittsweise ein erster Einhängekanal (14) ausgebildet ist, mittels dessen der Bezug (12) wenigstens abschnittsweise an der Lehnenschale (10) befestigt ist, **dadurch gekennzeichnet, dass** an der Lehnenschale (10) am Übergang von wenigstens einer Seitenwange (10d) zum Hauptbereich (10a) ein zweiter Einhängekanal (15) ausgebildet ist, mittels dessen der Bezug (12) abschnittsweise an der Lehnenschale (10) befestigt ist.

2. Fahrzeugsitz nach Anspruch 1, **dadurch gekennzeichnet, dass** die Befestigung des Bezugs (12) an der Lehnenschale (10) am oberen Ende der Seitenwange (10d) zwischen erstem Einhängekanal (14) und zweitem Einhängekanal (15) wechselt.

3. Fahrzeugsitz nach einem der vorhergehenden Ansprüche, **dadurch gekennzeichnet, dass** die Lehnenschale (10) oberhalb der Seitenwange (10d) eine Schulterwange (10c) aufweist.

4. Fahrzeugsitz nach Anspruch 2 und 3, **dadurch gekennzeichnet, dass** die Befestigung des Bezugs (12) an der Lehnenschale (10) am Übergang von der Schulterwange (10c) zur Seitenwange (10d) zwischen erstem Einhängekanal (14) und zweitem Einhängekanal (15) wechselt.

5. Fahrzeugsitz nach Anspruch 3 oder 4, **dadurch gekennzeichnet, dass** die die Lehnenschale (10) oberhalb der Schulterwange (10c) einen Kopfstützenbereich (10b) aufweist.

6. Fahrzeugsitz nach Anspruch 5, **dadurch gekennzeichnet, dass** der Bezug (12) im Kopfstützenbereich (10b) und an den beidseitig vorgesehenen Schulterwangen (10c) mittels des ersten Einhängekanals (14) an der Lehnenschale (10) befestigt ist.

7. Fahrzeugsitz nach einem der vorhergehenden Ansprüche, **dadurch gekennzeichnet, dass** der Bezug (12) an den beidseitig vorgesehenen Seitenwangen (10d) mittels je eines zweiten Einhängekanals (15) an der Lehnenschale (10) befestigt ist.

8. Fahrzeugsitz nach einem der vorhergehenden Ansprüche, **dadurch gekennzeichnet, dass** die Seitenwange (10d) am Übergang zum Hauptbereich (10a) eine nach hinten weisende Rippe (10r) aufweist.

9. Fahrzeugsitz nach Anspruch 8, **dadurch gekennzeichnet, dass** der zweite Einhängekanal (15) in einer Vertiefung zwischen der Rippe (10r) und dem Hauptbereich (10a) entsteht.

10. Fahrzeugsitz nach einem der vorhergehenden Ansprüche, **dadurch gekennzeichnet, dass** der Bezug (12) an seinem Rand eine flexible Einhängeleiste (18) aufweist.

11. Fahrzeugsitz nach Anspruch 10, **dadurch gekennzeichnet, dass** die Einhängeleiste (18) wenigstens am Obermaterial des Bezugs (12) angenäht ist.

12. Fahrzeugsitz nach Anspruch 10 oder 11, **dadurch gekennzeichnet, dass** der Bezug (12) mittels der Einhängeleiste (18) in den ersten Einhängekanal (14) und/oder in den zweiten Einhängekanal (15) eingehängt ist.

13. Fahrzeugsitz nach Anspruch 12, **dadurch gekennzeichnet, dass** die Einhängeleiste (18) im Profil einen Haken (18c) aufweist, welcher bei eingehängter Einhängeleiste (18) - wenigstens abschnittsweise - einen Gegenhaken (10s) am Rand (10q) der Lehnenschale (10) oder an einer Rippe (10r) der Seitenwange (10d) hintergreift.

14. Fahrzeugsitz nach Anspruch 12 oder 13, **dadurch gekennzeichnet, dass** die Einhängeleiste (18) einen Wulst (18b) aufweist, mittels dessen die eingehängte Einhängeleiste (18) den Bezug (12) gegen die Lehnenschale (10) drückt.

15. Fahrzeugsitz nach einem der Ansprüche 10 bis 14, **dadurch gekennzeichnet, dass** die Einhängeleiste (18) einstückig aus zwei verschieden harten Kunststoffen gespritzt ist.

16. Fahrzeugsitz nach einem der vorhergehenden Ansprüche, **dadurch gekennzeichnet, dass** die Lehne (4) mittels wenigstens Beschlags (5) schwenkbar am Sitzteil (3) angebracht ist.

17. Fahrzeugsitz nach Anspruch 16, **dadurch gekennzeichnet, dass** der Beschlag (5) mit einem Lehnenholm (11) verbunden ist, welcher an der Lehnenschale (10) befestigt ist.

18. Fahrzeugsitz nach Anspruch 17, **dadurch gekennzeichnet, dass** der Lehnenholm (11) an der zugeordneten Seitenwange (10d) der Lehnenschale (10) befestigt und durch den Bezug (12) bedeckt ist.

## Claims

1. A vehicle seat, in particular a motor vehicle seat, with a seat part (3) and a backrest (4), which has a backrest shell (10) as a supporting structure, and a covering, wherein
the backrest shell (10) has a main area (10a), side cheeks (10d) protruding from each side of the main area (10a), and a first mounting channel (14) is designed in at least one or more sections along the edge (10q) of the backrest shell (10), by means of which mounting channel (14) the covering (12) is attached in at least one or more sections to the backrest shell (10),
**characterised in that**,
a second mounting channel (15) is designed on the backrest shell (10) at the transition from at least one side cheek (10d) to the main area (10a), by means of which second mounting channel (15) the covering (12) is attached in one or more sections to the backrest shell (10).

2. The vehicle seat in accordance with claim 1,
**characterised in that**,
at the upper end of the side cheek (10d), the attachment of the covering (12) onto the backrest shell (10) changes from the first mounting channel (14) to the second mounting channel (.15).

3. The vehicle seat in accordance with one of the preceding claims,
**characterised in that**,
above the side cheek (10d) the backrest shell (10) has a shoulder cheek (10c).

4. The vehicle seat in accordance with claims 2 and 3,
**characterised in that**,
at the transition from the shoulder cheek (10c) to the side cheek (10d), the attachment of the covering (12) onto the backrest shell (10) changes from the first mounting channel (14) to the second mounting channel (15).

5. The vehicle seat in accordance with claims 3 or 4,
**characterised in that**,
above the shoulder cheek (10c) the backrest shell (10) has a head support area (10b).

6. The vehicle seat in accordance with claim 5,
**characterised in that**,
the covering (12) in the head support area (10b), and on the shoulder cheeks (10c) provided on both sides, is attached onto the backrest shell (10) by means of the first mounting channel (14).

7. The vehicle seat in accordance with one of the preceding claims,
**characterised in that**,
the covering (12) on the side cheeks (10d) provided on both sides is attached onto the backrest shell (10) by means of a second mounting channel (15) on each side.

8. The vehicle seat in accordance with one of the preceding claims,
**characterised in that**,
at the transition to the main area (10a) the side cheek (10d) has a rib (10r) pointing backwards.

9. The vehicle seat in accordance with claim 8,
**characterised in that**,
the second mounting channel (15) is formed in a depression between the rib (10r) and the main area (10a).

10. The vehicle seat in accordance with one of the preceding claims,
**characterised in that**,
at its edge the covering (12) has a flexible mounting strip (18).

11. The vehicle seat in accordance with claim 10,
**characterised in that**,
the mounting strip (18) is sewed on to at least the upper material of the covering (12).

12. The vehicle seat in accordance with claims 10 or 11,
**characterised in that**,
by means of the mounting strip (18) the covering (12) is fitted in the first mounting channel (14) and/or in the second mounting channel (15).

13. The vehicle seat in accordance with claim 12,
**characterised in that**,
in the profile the mounting strip (18) has a hook (18c), which when the mounting strip (18) is fitted - in at least one or more sections - engages underneath a mating hook (10s) on the edge (10q) of the backrest shell (10), or on a rib (10r) of the side cheek (10d).

14. The vehicle seat in accordance with claims 12 or 13,
**characterised in that**,
the mounting strip (18) has a bead (18b), by means of which the fitted mounting strip (18) presses the covering (12) against the backrest shell (10).

15. The vehicle seat in accordance with one of the claims 10 to 14,
**characterised in that**,
the mounting strip (18) is injection moulded in one piece out of two different hard plastics.

16. The vehicle seat in accordance with one of the preceding claims,
**characterised in that**,
the backrest (4) is fitted onto the seat part (3) such that it can pivot by means of at least one fitting (5).

17. The vehicle seat in accordance with claim 16,
**characterised in that**,
the fitting (5) is connected with a backrest spar (11), which is attached to the backrest shell (10).

18. The vehicle seat in accordance with claim 17,
**characterised in that**,
the backrest spar (11) is attached to the assigned side cheek (10d) of the backrest shell (10) and is covered by the covering (12).

## Revendications

1. Siège de véhicule, en particulier siège de véhicule automobile, comprenant une partie de siège (3) et un dossier (4) qui présente une coque de dossier (10) en tant que structure porteuse et une enveloppe, dans lequel la coque de dossier (10) présente une partie principale (10a), de chaque côté, une joue latérale (10d) faisant saillie de la partie principale (10a) de chaque côté respectivement, et le long du bord (10q) de la coque de dossier (10), un premier canal d'accrochage (14) est formé au moins par tronçons, au moyen duquel l'enveloppe (12) est fixée au moins par tronçons sur la coque de dossier (10), **caractérisé en ce qu'**un second canal d'accrochage (15) est formé sur la coque de dossier (10) sur le passage d'au moins une joue latérale (10d) vers la partie principale (10a), au moyen duquel l'enveloppe (12) est fixée par tronçons sur la coque de dossier (10).

2. Siège de véhicule selon la revendication 1, **caractérisé en ce que** la fixation de l'enveloppe (12) à la coque de dossier (10) à l'extrémité supérieure de la joue latérale (10d) change entre le premier canal d'accrochage (14) et le second canal d'accrochage (15).

3. Siège de véhicule selon la revendication 1 ou 2, **caractérisé en ce que** la coque de dossier (10) présente une joue d'épaule (10c) au-dessus de la joue latérale (10d).

4. Siège de véhicule selon la revendication 2 et 3, **caractérisé en ce que** la fixation de l'enveloppe (12) à la coque de dossier (10) sur le passage de la joue d'épaule (10c) vers la joue latérale (10d) change entre le premier canal d'accrochage (14) et le second canal d'accrochage (15).

5. Siège de véhicule selon la revendication 3 ou 4, **caractérisé en ce que** la coque de dossier (10) présente une partie d'appui-tête (10b) au-dessus de la joue d'épaule (10c).

6. Siège de véhicule selon la revendication 5, **caractérisé en ce que** l'enveloppe (12) dans la partie d'appui-tête (10b) et sur les joues d'épaule (10c) prévues des deux côtés est fixée à la coque de dossier (10) au moyen du premier canal d'accrochage (14).

7. Siège de véhicule selon l'une des revendications précédentes, **caractérisé en ce que** l'enveloppe (12) sur les joues latérales (10d) prévues des deux côtés est fixée à la coque de dossier (10) au moyen respectivement d'un second canal d'accrochage (15).

8. Siège de véhicule selon l'une des revendications précédentes, **caractérisé en ce que** la joue latérale (10d) présente une nervure orientée vers l'arrière (10r) sur le passage vers la partie principale (10a).

9. Siège de véhicule selon la revendication 8, **caractérisé en ce que** le second canal d'accrochage (15) est produit dans un creux entre la nervure (10r) et la partie principale (10a).

10. Siège de véhicule selon l'une des revendications précédentes, **caractérisé en ce que** l'enveloppe (12) présente d'une baguette d'accrochage flexible (18) sur son bord.

11. Siège de véhicule selon la revendication 10, **caractérisé en ce que** la baguette d'accrochage (18) est cousue au moins sur le matériau de dessus de l'enveloppe (12).

12. Siège de véhicule selon la revendication 10 ou 11, **caractérisé en ce que** l'enveloppe (12) est accrochée dans le premier canal d'accrochage (14) et/ou dans le second canal d'accrochage (15) au moyen de la baguette d'accrochage (18).

13. Siège de véhicule selon la revendication 12, **caractérisé en ce que** la baguette d'accrochage (18) présente un crochet (18c) dans le profil, lequel, lorsque la baguette d'accrochage (18) est accrochée, met en prise par l'arrière, au moins par tronçons, un contre-crochet (10s) sur le bord (10q) de la coque de dossier (10) ou sur une nervure (10r) de la joue latérale (10d).

14. Siège de véhicule selon la revendication 12 ou 13, **caractérisé en ce que** la baguette d'accrochage (18) présente un bourrelet (18b) au moyen duquel la bague d'accrochage (18) accrochée, appuie l'enveloppe (12) contre la coque de dossier (10).

15. Siège de véhicule selon l'une des revendications 10 à 14, **caractérisé en ce que** la baguette d'accrochage (18) est injectée d'une seule pièce à partir de deux plastiques durs différents.

16. Siège de véhicule selon l'une des revendications précédentes, **caractérisé en ce que** le dossier (4) est posé pivotant sur la partie de siège (3) au moyen d'au moins une ferrure (5).

17. Siège de véhicule selon la revendication 16, **caractérisé en ce que** la ferrure (5) est reliée à une barre de dossier (11) qui est fixée sur la coque de dossier (10).

18. Siège de véhicule selon la revendication 17, **caractérisé en ce que** la barre de dossier (11) est fixée à la joue latérale (10d) correspondante de la coque de dossier (10) et est couverte par l'enveloppe (12).
